# EUROPEAN PATENT APPLICATION

(11) **EP 1 575 109 A1**
(43) Date of publication of application: **14.09.2005**
(21) Application number: 05005061.6
(22) Date of filing: 08.03.2005
(51) Int. Cl.: H01M 8/02

(54) **Fuel cell separator, fuel cell stack, fuel cell vehicle, and method of manufacturing fuel cell separator**

(30) Priority: 11.03.2004 JP 2004069488; 29.09.2004 JP 2004283573
(71) Applicant: NISSAN MOTOR CO., LTD., Kanagawa-ken (JP)
(72) Inventor: Uchiyama, Noriko, Miura-shi Kanagawa-ken (JP); Chiba, Nobutaka, Yokohama-shi Kanagawa-ken (JP); Kano, Makoto, Yokohama-shi Kanagawa-ken (JP)
(74) Representative: Grünecker, Kinkeldey, Stockmair & Schwanhäusser Anwaltssozietät

(57) **Abstract**

A fuel cell separator of the present invention includes a base material made of stainless steel, and a nitride compound layer provided on a surface of the base material. Further, a method of manufacturing the fuel cell separator includes a step of preparing the base material made of stainless steel; and a step of nitriding the surface of the base material at 590 °C or lower to form on the surface of the base material a nitride compound layer having a crystal structure where a nitrogen atom is located in an octahedral hole at a center of a unit cell of a face-centered cubic lattice formed of at least one or more kinds of metal atoms selected from iron, chromium, nickel and molybdenum. The fuel cell separator has low contact resistance produced between the separator and an electrode, excellent corrosion resistance.

## Description

### BACKGROUND OF THE INVENTION

### 1. Field of the Invention

The present invention relates to a fuel cell separator, a fuel cell stack, a fuel cell vehicle, and a method of manufacturing the fuel cell separator, and particularly to a polymer electrolyte fuel cell separator formed of stainless steel.

### 2. Description of the Related Art

From a viewpoint of the protection of global environment, it has been examined to drive a vehicle by using a motor actuated by a fuel cell instead of an internal combustion engine. Fuel cells do not require fossil fuel, consumption of which raises a problem of exhaustion of natural resources, and therefore do not generate exhaust gas or the like. Fuel cells also have excellent characteristics in that they cause little noise and can realize higher energy recovery efficiency than other energy engines.

Fuel cells are categorized into polymer electrolyte fuel cells, phosphoric acid fuel cells, molten carbonate fuel cells, solid oxide fuel cells, and the like depending on the types of electrolyte used. Of these types of fuel cells, a polymer electrolyte fuel cell uses a polymer electrolyte membrane, which contains a proton exchange group within a molecule, as electrolyte, and utilizes the membrane's function as a proton-conductive electrolyte which is obtained once the membrane is saturated with water. A polymer electrolyte fuel cell operates at relatively low temperature and has high electrical efficiency. In addition, since a polymer electrolyte fuel cell is small and light in weigh with associated equipment, it is expected to be used for various purposes such as for mounting on an electric vehicle.

In order to mount polymer electrolyte fuel cells on a vehicle, they should be formed into a fuel cell stack. A fuel cell stack is configured by stacking a plurality of single cells, each serving as a base unit, sandwiching both sides of the cells with end flanges and then holding and pressing the cells by using fastening bolts so that the cells are integrated with each other. Each single cell is configured by a polymer electrolyte membrane, as well as an anode (a hydrogen electrode) and a cathode (an oxygen electrode) which are joined onto both sides of the polymer electrolyte membrane.

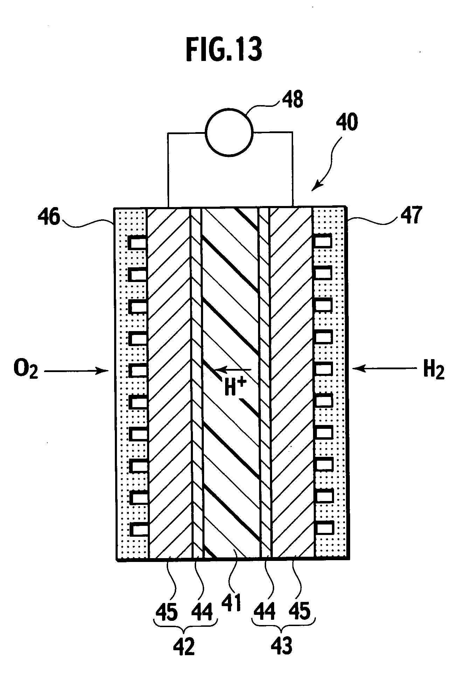

FIG. 13 shows a configuration of a single cell which forms a fuel cell stack. As shown in FIG. 13, a single cell 40 is made of a membrane electrode assembly formed by joining an oxygen electrode 42 and a hydrogen electrode 43 onto both sides of a polymer electrolyte membrane 41 and integrating them together. Both the oxygen electrode 42 and the hydrogen electrode 43 have a two-layer construction including a reaction membrane 44 and a gas diffusion layer 45, and the reaction membrane 44 is in contact with the polymer electrolyte membrane 41. An oxygen electrode side separator 46 and a hydrogen electrode side separator 47 are placed on the oxygen electrode 42 and the hydrogen electrode 43, respectively, for stacking. An oxygen gas flow pass, a hydrogen gas flow pass, and a cooling water flow pass are formed by the oxygen electrode side separator 46 and the hydrogen electrode side separator 47.

The single cell 40 having the above construction is manufactured as follows; the oxygen electrode 42 and the hydrogen electrode 43 are located on both sides of the polymer electrode membrane 41, respectively, and joined together usually by hot pressing, forming the membrane electrode assembly; and the separators 46 and 47 are placed on both sides of the membrane electrode assembly. Mixed gas of hydrogen, carbon dioxide, nitrogen, and moisture vapor is provided to the side of the hydrogen electrode 43 of a fuel cell configured by the above single cells 40, and air and moisture vapor are supplied to the side of the oxygen electrode 42 of the same. Then, electrochemical reactions occur mainly on the contact surfaces between the polymer electrolyte membrane 41 and the reaction membranes 44. This reaction is described more specifically below.

Once oxygen gas and hydrogen gas are supplied respectively to the oxygen gas flow pass and the hydrogen gas flow pass in the single cell 40 having the foregoing construction, the oxygen gas and hydrogen gas are supplied to the reaction membranes 44 through each gas diffusion layer 45, and the following reactions occur in each reaction membrane 44.

Hydrogen electrode side: H₂ → 2H⁺ + 2e⁻ (Formula 1)

Oxygen electrode side: (1/2)O₂ + 2H⁺ + 2e⁻ → H₂O (Formula 2)

Once hydrogen gas is supplied to the hydrogen electrode 43, the reaction of Formula 1 progresses and H⁺ and e⁻ are produced. H⁺ moves within the polymer electrode membrane 41, which contains water, and flows towards the oxygen electrode 42, and e- flows from the hydrogen electrode 43 to the oxygen electrode 42 through a load 48. On the side of the oxygen electrode 42, H⁺, 2e⁻, and the supplied oxygen gas progresses the reaction of Formula 2, thus generating electricity.

As described earlier, fuel cell separators used for a fuel cell stack have a function of electrically connecting single cells. Therefore, fuel cell separators are required to have good electric conductivity and low contact resistance with other components such as gas diffusion layers, and the like. Temperature of each gas supplied to the fuel cell is as high as 80 and 90 °C, so H⁺ is generated in the hydrogen electrode as stated earlier, and the oxygen electrode is in a strong acid atmosphere with acidity of pH 2 to 3 as oxygen, air and the like pass through it. Hence, the fuel cell separators together with the oxygen and hydrogen electrodes are also required to have corrosion resistance which is high enough to endure a strong acid atmosphere.

The use of stainless steel for the fuel cell separators is thus considered as it has good electric conductivity and corrosion resistance. Stainless steel has excellent corrosion resistance since it has a closely-packed passive state film, in other words, chromium oxide (CrO·OH·nH₂O, Cr₂O₃·xH₂O) formed on the surface thereof.

However, this passive state film causes contact resistant with a carbon paper that is normally used as a gas diffusion layer. With regard to excessive voltage due to resistance polarization within a stationary type fuel cell, exhaust heat is recovered by cogeneration or the like, so an improvement in heat efficiency can be expected as whole. However, as for a fuel cell for use in a vehicle, contact resistance-based heat loss has to be distributed to outside by a radiator through cooling water, which means high contact resistance results in low electrical efficiency. Moreover, the decrease in electric efficiency is equal to an increase in heat, and there will therefore be a need for providing a larger cooling system. Accordingly, a reduction in contact resistance is a key issue to be resolved.

For this purpose, one kind of press-molded fuel cell separators made of stainless steel has been proposed. In this fuel cell separator, a gold-plated layer is formed directly on a surface which comes into contact with an electrode. (See Japanese Patent Laid-Open Publication No. H10-228914.) There is another proposed fuel cell in which, after stainless steel is formed into the shape of the fuel cell separator, a passive state film on a surface which comes into contact with other member and produces contact resistance is removed, and then the surface is coated with noble metal or a noble metal alloy. (See Japanese Patent Laid-Open Publication No. 2001-6713.)

### SUMMARY OF THE INVENTION

However, plating or coating the surface of a fuel cell separator with noble metal like the above-mentioned conventional techniques requires costs for such materials.

The present invention has been accomplished focusing on the above-mentioned problems of the conventional techniques. An object of the present invention is to provide a fuel cell separator which achieves low contact resistance produced between the separator and an electrode, excellent corrosion resistance, and low cost, as well as a fuel cell stack and a fuel cell vehicle on which the fuel cell stack is mounted.

The first aspect of the present invention provides a fuel cell separator comprising: base material made of stainless steel; and nitride compound layer provided on a surface of the base material.

The second aspect of the present invention provides a fuel cell stack comprising: a fuel cell separator including: a base material made of stainless steel; and a nitride compound layer provided on a surface of the base material.

The third aspect of the present invention provides a fuel cell vehicle comprising: a fuel cell stack including a fuel cell separator having: a base material made of stainless steel; and a nitride compound layer provided on a surface of the base material.

The fourth aspect of the present invention provides a method of manufacturing a fuel cell separator comprising: preparing a base material made of stainless steel; and nitriding a surface of the base material at 590 °C or lower to form on the surface of the base material a nitride compound layer having a crystal structure where a nitrogen atom is located in an octahedral hole at a center of a unit cell of a face-centered cubic lattice formed of at least one or more kinds of metal atoms selected from iron, chromium, nickel and molybdenum.

### BRIEF DESCRIPTION OF THE DRAWINGS

The invention will now be described with reference to the accompanying drawings wherein;
FIG. 1 is a schematic view of a fuel cell stack according to an embodiment of the present invention;
FIG. 2 is a perspective view showing the fuel cell stack according to the embodiment of the present invention;
FIG. 3 is a schematic view showing a structure of a crystal contained in a nitride compound layer of a fuel cell separator according to the embodiment of the present invention;
FIG. 4A is an external side view of an electric vehicle on which the fuel cell stack according to the embodiment of the present invention is mounted;
FIG. 4B is an external top view of the electric vehicle on which the fuel cell stack according to the embodiment of the present invention is mounted;
FIG. 5 is a schematic view explaining a method of measuring contact resistance of samples obtained in Examples and Comparative Examples;
FIG. 6 is a view showing constructions and evaluation results of the samples obtained in Examples and Comparative Examples.
FIG. 7 is a view showing evaluation results of the samples obtained in Examples and Comparative Examples;
FIG. 8 is a view showing X-ray diffraction patterns of samples obtained in Example 5 and Comparative Example 1;
FIG. 9 is a cross-sectional photography of the sample obtained in Example 5;
FIG. 10 is a cross-sectional photography of the sample obtained in Comparative Example 1;
FIG. 11 is a view showing a depth-direction atom profile of the sample obtained in Example 5 by a scanning Auger electron spectrometry;
FIG. 12A is a view showing a relationship between contact resistance and nitrogen and oxygen contents at the depth of 3 to 4 nm from the outermost surface.
FIG. 12B is a view showing a relationship between contact resistance and nitrogen and oxygen contents at the depth of 10 nm from the outermost surface;
FIG. 12C is a view showing a relationship between contact resistance and nitrogen and oxygen contents at the depth of 100 nm from the outermost surface; and
FIG. 13 is a cross-sectional view showing a construction of a single cell forming a fuel cell stack.

### DETAILED DESCRIPTION OF THE PREFERRED EMBODIMENTS

The fuel cell separator, the fuel cell stack, the fuel cell vehicle, and the method of manufacturing the fuel cell separator of the present invention are detailed below based upon embodiments.

### (Fuel Cell Separator and Fuel Cell Stack)

The embodiments of the fuel cell separator and the fuel cell stack according to the present invention are described. The fuel cell separator according to the embodiment of the present invention is a fuel cell separator in which stainless steel is used as a base material, and is characterized in that a nitride compound layer is formed on the surface of the base material. The fuel cell stack according to the embodiment of the present invention is characterized in that the fuel cell separators according to the embodiment of the present invention are used. The fuel cell stack is configured by alternately stacking the plurality of fuel cell separators and single cells, each serving as a base unit that generates electricity by electrochemical reactions.

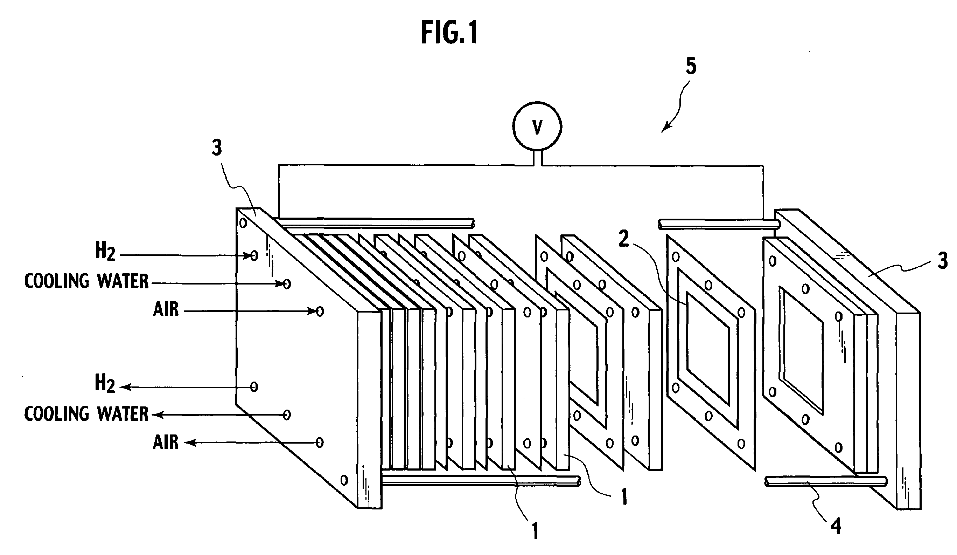

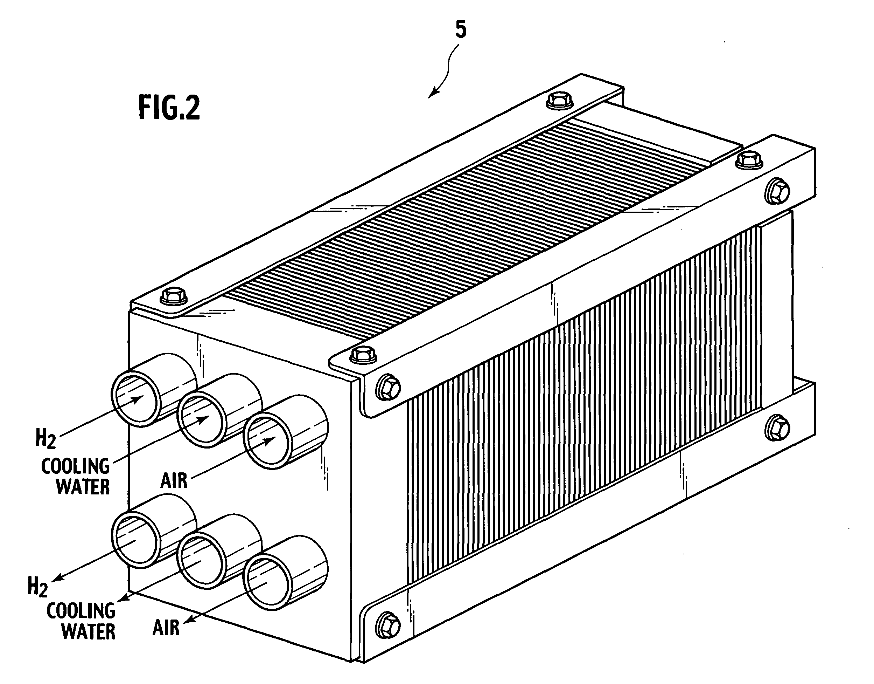

FIG. 1 schematically shows a part of the fuel cell stack 5 in which the fuel cell separators 1 according to the embodiment of the present invention are used. As shown in FIG. 1, the fuel cell stack 5 is configured by alternately stacking the plurality of fuel cell separators 1 and single cells 2. Each single cell 2 is made of a membrane electrode assembly in which an oxygen electrode is provided on one side of a polymer electrolyte membrane and a fuel electrode is provided on the other side of the membrane. Moreover, the fuel cell separators 1 are located on both sides of the membrane electrode assembly so that an oxygen flow pass and a fuel gas flow pass are formed inside the stack. The polymer electrolyte membrane may be a perfluorocarbon polymer membrane having a sulfonic acid group (product name: Nafion 1128 (registered trademark) by DuPont Kabushiki Gaisya) or the like. After the stacking, end flanges 3 are located at both ends and the circumferences of the end flanges 3 are fastened with bolts 4 as shown in FIG. 1, constructing the fuel cell stack 5. FIG. 2 is a perspective view of the fuel cell stack 5.

In the fuel cell separator 1 according to the embodiment of the present invention, stainless steel is used as the base material and a nitride compound layer is formed on the surface of the base material. Provision of the nitride compound layer improves corrosion resistance in an acid atmosphere and lowers contact resistant between the separator and a carbon paper that is usually used as a fuel cell. In addition, since contact resistance can be lowered without a need for direct noble metal plating on a surface of the separator which comes into contact with an electrode, a cost reduction can be realized.

Further, it is preferred that an atom ratio of chromium (Cr) to iron (Fe) Cr/Fe contained in the nitride compound layer be lower than that of Cr to Fe contained in the base material. Where the atom ratio of Cr to Fe in the nitride compound layer is higher than that of Cr to Fe in the base material, nitrogen is bonded to Cr in the base material, and primarily, Cr-based nitride having a NaCl-type crystal structure such as CrN is deposited. Thus, a depletion layer of Cr is produced in the base material, causing lower corrosion resistance. On the other hand, where the atom ratio of Cr to Fe contained in the nitride compound layer is lower than that of Cr to Fe in the base material, Cr-based nitride is not deposited. Therefore, Cr, which is contained in the base material and effective for corrosion resistance, is not reduced and corrosion resistance of the fuel cell separator 1 is thus maintained even after nitriding thereof. As a result, corrosion resistance of the separator in a high acid atmosphere becomes even more excellent.

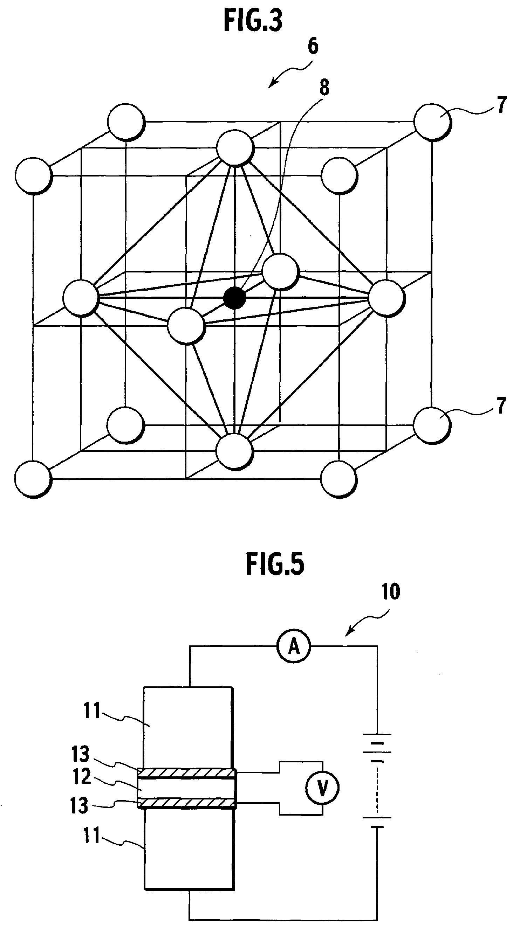

More specifically, it is preferred that the above-mentioned nitride compound layer have a crystal structure where an N atom is located in the octahedral hole at the center of the unit cell of a face-centered cubic lattice formed of at least one or more kinds of metal atoms selected from a group of iron (Fe), chromium (Cr), nickel (Ni) and molybdenum (Mo). Moreover, as shown in FIG. 3, the nitride compound layer has a crystal structure 6 expressed as a M₄N type. Note that M represents metal atoms 7 of at least one or more kinds of metal atoms selected from the group of Fe, Cr, Ni and Mo, and N represents a nitrogen atom 8. The nitrogen atom 8 occupies 1/4 of the octahedral hole at the center of the unit cell of the crystal structure 6. In other words, the crystal structure 6 is an interstitial solid solution in which a nitrogen atom 8 is interstitially present in the octahedral hole at the center of the unit cell of a face-centered cubic lattice formed of metal atoms 7. When expressed in a space lattice of in a cubic crystal, the nitrogen atom 8 is located in a lattice coordinate (1/2, 1/2, 1/2) of each unit cell. Moreover, in this crystal structure 6, the metal atoms 7 are mainly Fe but can include an alloy obtained by partially substituting other kinds of metal atoms such as Cr, Ni and Mo for Fe. Where the atom ratio of Cr to Fe in the nitride compound layer is higher than that in the base material as described earlier, nitrogen contained in the nitride compound layer is bonded to Cr in the nitride compound layer, and Cr-based nitride such as CrN, in other words, the NaCl-type nitride compound, becomes a main component. As a result, corrosion resistance of the nitride compound layer is lowered. Hence, it is preferred that the metal atoms 7 are mainly Fe. The nitride compound layer with this type of crystal structure is considered to be nitride having the fcc or fct structure with high-density transition and twin crystal, high hardness of 1000HV, and supersaturated nitrogen solid solution (Yasumaru and Kamachi, *Journal of Japan Institute of Metals*, Vol. 50, pp.362-368, 1986). In such nitride compound layer, the closer to the surface, the higher the concentration of nitrogen becomes. In addition, since CrN does not become a main component, Cr, which is effective for corrosion resistance, is not reduced and corrosion resistance is thus maintained even after nitriding. Where the nitride compound layer has the crystal structure where an N atom is located in the octahedral hole at the center of the unit cell of a face-centered cubic lattice formed of at least one or more kinds of metal atoms selected from a group of Fe, Cr, Ni and Mo, corrosion resistance of the separator in a strong acid atmosphere of pH 2 to 3 can be even more excellent. In addition, contact resistance between the separator and a carbon paper can be lowered.

It is preferred that the thickness ratio of the nitride compound layer to the base material ranges from 1/200 to 1/10. To be more specific, where the thickness of the base material is 0.1 mm, it is preferred that the nitride compound layer is formed on the surface of the base material to have a thickness ranging from 0.5 to 10 µm. In this case, the separator can have excellent corrosion resistance in a strong acid atmosphere and low contact resistance with a carbon paper that configures a gas diffusion layer. Where the thickness of the nitride compound layer is smaller than 0.5 µm, a crack may occur between the nitride compound layer and the base material, and bonding strength between the nitride compound layer and the base material becomes insufficient. Therefore, after a long period of use, the nitride compound layer is easily peeled off from the interface with the base material, causing a difficulty in obtaining sufficient corrosion resistance. Where the thickness of the nitride compound layer is over 10 µm, strain within the nitride compound layer becomes excessive as the thickness of the nitride compound layer increases, thus causing a crack in the nitride compound layer. Due to this, pitting corrosion easily occurs in the fuel cell separator, making it difficult to improve corrosion resistance.

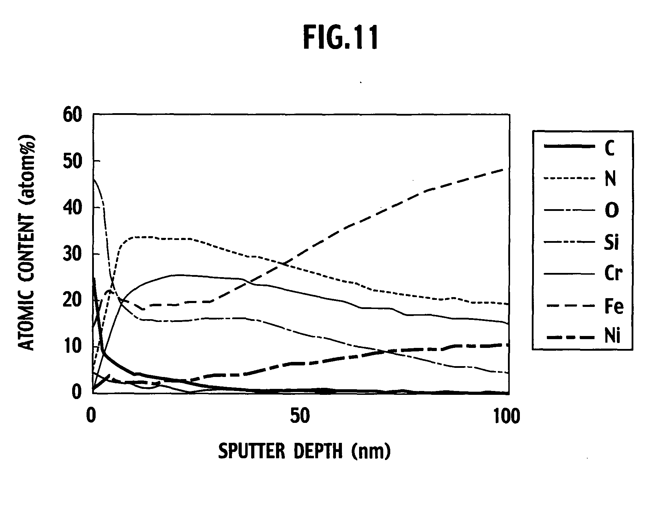

Moreover, it is preferred that a nitrogen content and an oxygen content at the depth of 3 to 4 nm from the outermost surface of the nitride compound layer be 9 atom% or higher and 43 atom% or lower, respectively. In other words, as shown in FIG. 11, in an area to a sputter depth of 3 to 4 nm, it is preferred that the nitrogen content be 9 atom% or higher and the oxygen content be 43 atom% or lower. Here, the outermost surface indicates an atom layer on the outermost portion of the nitride compound layer. Once the coverage of oxygen molecules adsorbed on the surface of metal increases, clear bonding of a metal atom and an oxygen atom is formed. This is oxidization of a metal atom. Such oxidization of a metal surface is first caused by oxidization of the first atom layer on the outermost portion. Once oxidization of the first atom layer ends, oxygen absorbed onto the first atom layer receives a free electron within the metal by tunnel effect and oxygen becomes an anion. Due to a strong local electrical field caused by the anion, a metal ion is drawn from the inside of the metal to the surface thereof, and the metal ion drawn out is bonded to an oxygen atom, thus producing the second oxide film. The reactions like this happen one after another, increasing the thickness of the oxide film. Accordingly, where the oxygen content within the nitride compound layer is more than 43 atom%, an electric-insulating oxide film is formed easily. On the contrary, where a compound of a metal atom and nitrogen is made with higher chemical potential of N within the nitride compound layer and even lower activity of the metal atom, free energy of the metal atom is decreased. This can lower reactivity of the metal atom to oxidization, and the metal atom is thus chemically stabilized. Therefore, an oxygen atom has no free electron to receive and no longer oxidizes the metal atom, thus suppressing the growth of an oxide film. Accordingly, where nitrogen content and oxygen content at the depth of 3 to 4 nm from the outermost surface of the nitride compound layer are 9 atom% or higher and 43 atom% or lower, respectively, it is possible to suppress the growth of an oxide film and lower contact resistance between a separator and a carbon paper. In addition, it becomes possible to obtain a fuel cell separator with excellent corrosion resistance in a strong acid atmosphere.

It is more preferred that the nitrogen content and oxygen content at the depth of 3 to 4 nm from the outermost surface of the nitride compound layer be 10 atom% or higher and 35 atom% or lower, respectively. In this case, contact resistance can be lowered even further.

It is also more preferred that a ratio of the oxygen content to the nitrogen content O/N at the depth of 3 to 4 nm from the outermost surface of the nitride compound layer be 4.8 or lower. In this case, the nitrogen content and oxygen content satisfy the requirement that they are to be 9 atom% or higher and 43 atom% or lower, respectively. Moreover, it is possible to obtain excellent corrosion resistance in a strong acid atmosphere, and contact resistance between the separator and a carbon paper can be lowered. If the nitrogen and oxygen contents deviate from the above range, contact resistance will be high because a passive state oxide film will be formed on the surface of the base material, and the separator will thus have poor electric conductivity. Note that it is even more preferred that O/N be 3.5 or lower.

It is also preferred that a nitrogen content and an oxygen content at the depth of 10 nm from the outermost surface of the nitride compound layer be 15 atom% or higher and 26 atom% or lower, respectively. In this case, the separator can have excellent corrosion resistance in a strong acid atmosphere and a lower contact resistance with a carbon paper. Where the nitrogen and oxygen contents deviate from the above range, contact resistance generated between the separator and an electrode increases. Therefore, a value of contact resistance of each single cell, which configures the fuel cell stack, exceeds 40 mΩ·cm², thus deteriorating power generation capability. It is more preferable that the nitrogen content and oxygen content at the depth of 10 nm from the outermost surface of the nitride compound layer be 18 atom% or higher and 22 atom% or lower, respectively. In this case, contact resistance can be lowered even further.

Furthermore, it is preferred that a nitrogen content and an oxygen content in an area between 100 nm to 200 nm from the outermost surface of the nitride compound layer be 16 atom% or higher and 21 atom% or lower, respectively. In this case, contact resistance can be lowered even further.

As described above, since the above-described construction is adopted, the fuel cell separator according to the embodiment of the present invention has excellent corrosion resistance. This separator can also be low in cost and high in productivity and at the same time have low contact resistance with a neighboring component such as a gas diffusion layer and a good power generation capability of a fuel cell. Moreover, the fuel cell stack according to the embodiment of the present invention uses the fuel cell separators according to the embodiment of the present invention. Therefore, the fuel cell stack can maintain high electrical efficiency without losing a power generation capability and realize reduction of size and cost.

### (Method of manufacturing Fuel Cell Separator)

Next, an embodiment of a method of manufacturing the fuel cell separator of the above embodiment of the present invention is described. The method of manufacturing this fuel cell separator is characterized in that a base material made of stainless steel is nitrided at temperature of 590 °C or lower to form a nitride compound layer on the surface of the base material, the nitride compound layer having the crystal structure where an N atom is located in the octahedral hole at the center of the unit cell of a face-centered cubic lattice formed of at least one or more kinds of metal atoms selected from a group of Fe, Cr, Ni and Mo.

Once a surface of stainless steel is nitrided at high temperature, nitrogen is bonded to Cr contained in the base material and nitride having the NaCl-type crystal structure such as CrN is mainly deposited. Therefore, corrosion resistance of the fuel cell separator is lowered. On the other hand, where nitriding is performed at temperature of 590 °C or lower, what is mainly formed on the surface of the base material is not a nitride compound having the NaCl-type crystal structure such as CrN, but that having a crystal structure where an N atom is located in the octahedral hole at the center of the unit cell of a face-centered cubic lattice formed of at least one or more kinds of metal atoms selected from a group of Fe, Cr, Ni and Mo. Amongst nitride compound layers, the one with this crystal structure has particularly high corrosion resistance. Therefore, nitriding at low temperature of 590 °C or lower can improve corrosion resistance of a fuel cell separator. Further, contact resistance between the separator and a neighboring component such as a gas diffusion layer can also be lowered, thus maintaining electrical efficiency of the fuel cell and enabling the fuel cell separator having highly reliable durability to be obtained at low cost. It is more preferred that nitriding is performed at temperature of 500 °C or lower. Where nitriding is carried out at temperature of 500 °C or lower, contact resistance is lowered further and a fuel cell separator with improved corrosion resistance can be obtained.

Where nitriding temperature is lower than 350 °C, an extended period of time is required for nitriding to obtain a nitride compound layer having the aforementioned crystal structure, which reduces productivity. Therefore, it is preferred that nitriding is performed at temperature ranging from 350 to 590 °C, more preferably from 350 to 500 °C.

Furthermore, it is preferred that nitriding be ion nitriding. Gas nitriding, gas nitrocarburizing, salt bath method, and ion nitriding can be applied to the nitriding. Where gas nitrocarburizing is used, oxygen partial pressure during nitriding is high, and therefore an oxygen content within a nitride compound layer will be high. Amongst the above nitriding methods, ion nitriding is performed as follows: nitrogen gas is ionized by glow discharge produced by application of a direct current voltage while an object to be nitrided is set as a cathode; and the ionized nitrogen collides at a very fast with the surface of the object to be nitrided, thus the object is nitrided. Therefore, ion nitriding can nitride the surface of stainless steel, the object to be nitrated, while easily removing a passive state film on the surface the stainless steel by sputtering effect of ion impacts, and is thus suitable for the nitriding of stainless steel. In addition, with ion nitriding, nitrogen ion is penetrated through the base material by a non-equilibrium reaction. Therefore, the foregoing crystal structure can be obtained with ease and in a short period of time, whereby corrosion resistance is improved.

With the method of manufacturing a fuel cell separator according to the present invention, formed is a nitride compound layer having a crystal structure where an N atom is located in the octahedral hole at the center of the unit cell of a face-centered cubic lattice formed of at least one or more kinds of metal atoms selected from a group of Fe, Cr, Ni and Mo. Therefore, it becomes possible to manufacture a fuel cell separator in which contact resistance generated between the separator and a component is low and corrosion resistance is excellent. It becomes also possible to manufacture such fuel cell separator with an easy operation and at low cost.

### (Fuel Cell Vehicle)

In this embodiment, a fuel cell electric vehicle powered by a fuel cell including the fuel cell stack manufactured in the foregoing method is described as an example of a fuel cell vehicle.

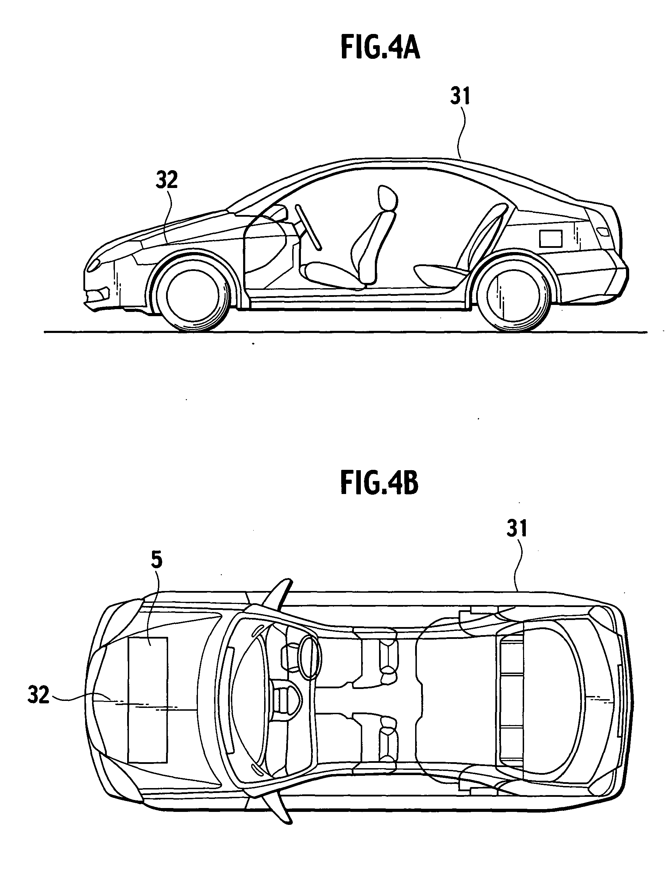

In FIGS. 4A and 4B show external views of the electric vehicle on which the fuel cell stack is mounted. As shown in FIG. 4B, an engine compartment 32 is formed on the front side of a vehicle body 31. The engine compartment 32 is formed by combining and welding front side members and hood ridges on the right and left sides, as well as a dash lower member which connects the right and left hood ridges including the front side members to each other. In the electric vehicle according to the embodiment of the present invention, the fuel cell stack 5 is mounted within the engine compartment 32.

By mounting on the a vehicle the fuel cell stack in which the fuel cell separators according to the embodiment of the present invention are applied and which has a good power generation capability, an improvement of fuel efficiency of the fuel cell electric vehicle can be achieved. Moreover, according to the embodiment, by mounting the small-sized and light-weighted fuel cell stack on a vehicle, the vehicle weight can be reduced, thus saving fuel and delivering more mileage. Furthermore, according to the embodiment, by mounting the small fuel cell on a mobile unit such as a vehicle, the usable interior space of the vehicle becomes wider, securing design freedom.

The electric vehicle was described as an example of the fuel cell vehicle. However, the present invention is not only applied to such vehicle as an electric vehicle but also to engines of an aircraft and the like which require electric energy.

Below are descriptions of Examples 1 to 14 of the fuel cell separators according to the embodiment of the present invention and Comparative Examples 1 to 7. These Examples are to investigate effectiveness of the fuel cell separator according to the present invention and show examples of fuel cell separators obtained by performing treatment to different materials under different conditions.

### (Preparation of Samples)

In each embodiment, after degreasing of a bright annealing material of 0.1 mm-thick austenitic stainless steel (SUS 304, SUS316, and SUS310), ion nitriding was performed on both sides of the stainless steel. As for conditions of the ion nitriding, nitriding temperature was between 350 and 700 °C, nitriding time was between 1 and 60 minutes, the gas mixture ratio of N₂:H₂ = 1:5 for Examples 1 to 10 and N₂:H₂ = 5:5 for Examples 10 to 14 and Comparative Examples 4 to 7, and nitriding pressure was 7 Torr (=931 Pa). No nitriding was carried out in Comparative Examples 1 to 3. Table 1 shows base materials used and ion nitriding conditions.

**Table 1**

| | Base material | Nitriding Conditions |
|---|---|---|
| Example 1 | SUS304 | 430 °C, 5 minutes |
| Example 2 | SUS316 | 430 °C, 5 minutes |
| Example 3 | SUS310 | 430 °C, 5 minutes |
| Example 4 | SUS316 | 400 °C, 30 minutes |
| Example 5 | SUS316 | 400 °C, 20 minutes |
| Example 6 | SUS316 | 450 °C, 3 minutes |
| Example 7 | SUS316 | 500 °C, 1 minute |
| Example 8 | SUS316 | 380 °C, 10 minutes |
| Example 9 | SUS316 | 380 °C, 5 minutes |
| Example 10 | SUS316 | 400 °C, 45 minutes |
| Example 11 | SUS316 | 400 °C, 60 minutes |
| Example 12 | SUS316 | 550 °C, 10 minutes |
| Example 13 | SUS316 | 570 °C, 10 minutes |
| Example 14 | SUS316 | 590 °C, 10 minutes |
| Comparative Example 1 | SUS304 | ― |
| Comparative Example 2 | SUS316 | ― |
| Comparative Example 3 | SUS310 | ― |
| Comparative Example 4 | SUS316 | 550 °C, 5 minutes |
| Comparative Example 5 | SUS316 | 600 °C, 5 minutes |
| Comparative Example 6 | SUS316 | 700 °C, 5 minutes |
| Comparative Example 7 | SUS316 | 350 °C, 5 minutes |

Each sample was evaluated in the following method.

### (Identification of Crystal Structure of Nitride Compound Layer)

Crystal structures of nitriding compound layers of the samples obtained by the aforementioned methods were identified by X-ray diffraction measurement of the base material surfaces modified by nitriding. X-ray diffraction device (XRD) made by Mac Science Co., Ltd. was used as a measurement device. Measurements were performed under conditions where a radiation source was CuKα ray, a diffraction angles was between 2 and 100 degrees, and a scan speed was 2 degrees/min.

### (Thickness Measurement of Nitride Compound Layer)

Thicknesses of nitride compound layers were measured by observation of cross sections thereof by using an optical microscope or a scanning electron microscope.

### (Measurement of Atom Ratio of Cr to Fe and Measurement of Nitrogen Content and Oxygen Content)

Measurement of the atom ratio of Cr to Fe contained in each nitride compound layer was obtained by measuring Fe content and Cr content in each nitride compound layer using an X-ray photoelectron spectroscopy (XPS). The nitrogen content and oxygen content at the depth of 3 to 4 nm from the outermost surface of the nitride compound layer were measured using XPS, and the ratio of oxygen content to nitrogen content O/N was obtained from the measurement results of the contents. The photoelectron spectroscopy device Quantum-2000 made by ULVAC-PHI, Inc. was used as a measurement device. The measurement was carried out by illuminating the samples with X-rays with the radiation source of Monochromated-Al-Kα ray (1486.4 eV, 20.0 W), a photoelectron extraction angle of 45 degrees, a measuring depth of about 4 nm, and a measuring area of ϕ 200 µm.

### (Measurement of Nitrogen Contents and Oxygen Contents at Depths of 10 nm and 100 nm from Outermost Layer of Nitride Compound Layer)

Nitrogen contents and oxygen contents at the depths of 10 nm and 100 nm from the outermost of each nitride compound layer were measured by using scanning Auger electron spectrometry equipment. The measurement device used was MODEL4300 made by ULVAC-PHI, Inc.. The measurement was carried out under the following conditions: an electron beam acceleration voltage of 5 kV, a measuring region of 20 µm × 16 µm, an ion gun accelerating voltage of 3 kV, and a sputtering rate of 10 nm/min (SiO₂ converted value).

### (Measurement of Contact Resistance Values)

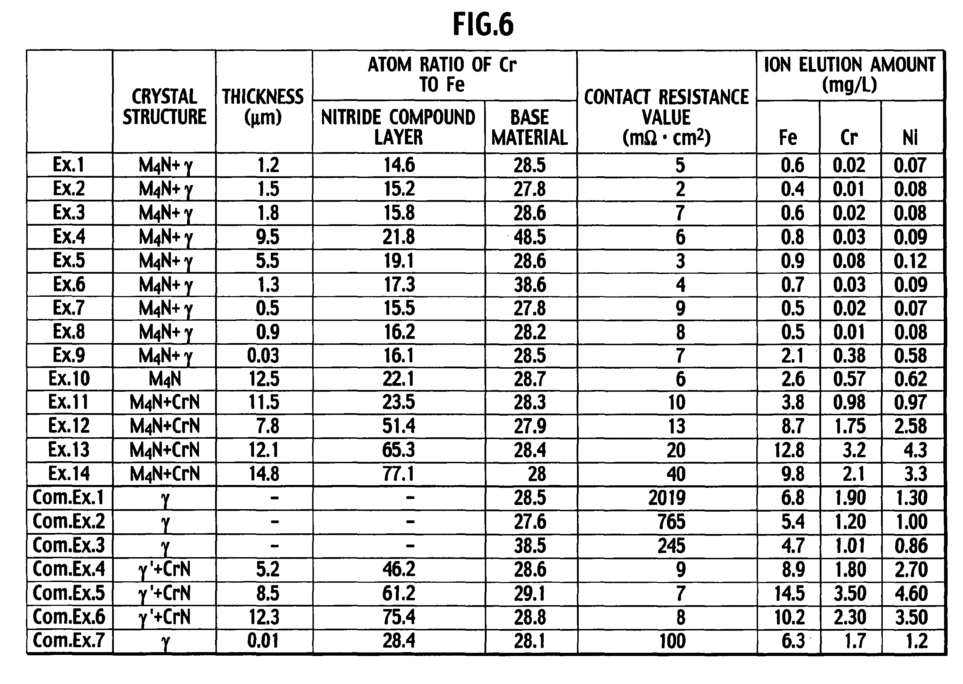

A piece having a size of 30 mm × 30 mm was cut out from each sample obtained from the foregoing Examples 1 to 14 and Comparative Examples 1 to 7 and contact resistance was measured. A TRS-2000SS type contact resistance measuring device made by ULVAC-RIKO, Inc. was used as a measuring device. As shown in FIG. 5, in this equipment 10, carbon papers 13 were placed between each electrode 11 and a sample 12 so that a construction of the electrode 11/carbon paper 13/ sample 12/ carbon paper 13/ and electrode 11 was made. Then, electrical resistance was measured twice when a current of 1 A/cm² at pressure on a measuring surface of 1.0 MPa was applied to the construction, and an average value of the measurements was obtained. The carbon papers used were those on which platinum-loaded carbon black was applied (carbon paper TGP-H-090 made by Toray Industries Inc., with a thickness of 0.26 mm, an apparent density of 0.49 g/cm³, a void volume of 73 %, air permeability of 37 mmaq/mm, and thickness volume resistivity of 0.07 Ω·cm²). The electrodes used were Cu-made electrodes ϕ 20 mm.

### (Evaluation of Corrosion Resistance)

A piece having a size of 30 mm × 30 mm was cut out from each sample obtained from the foregoing Examples 1 to 14 and Comparative Examples 1 to 7. Ion elution amount was then measured by controlled potential electrolysis testing, which is an electrochemical method, to evaluate corrosion resistance. In a fuel cell, an electric potential applied to an oxygen electrode side is up to about 1 V vs. SHE in comparison with a hydrogen electrode side. In addition, a polymer electrolyte membrane, having a proton exchange group such as a sulfonic acid group within a molecule, exerts proton conductivity when saturated with water, and exhibits strong acid. Therefore, corrosion resistance was evaluated by measuring metal ion contents melted out of the pieces by fluorescent X-ray analysis after the pieces were held for a certain period of time with electric potential applied. Conditions of the controlled potential electrolysis testing were a sulfuric acid aqueous solution of pH2, temperature of 80 °C, an electric potential of 1 V vs. SHE, and the certain holding time of 100 hours.

FIG. 6 shows crystal structures of nitride compound layers, thicknesses of the nitride compound layers, atom ratios of Cr to Fe, contact resistance values and ion elution amounts of the foregoing Examples 1 to 14 and Comparative Examples of 1 to 7.

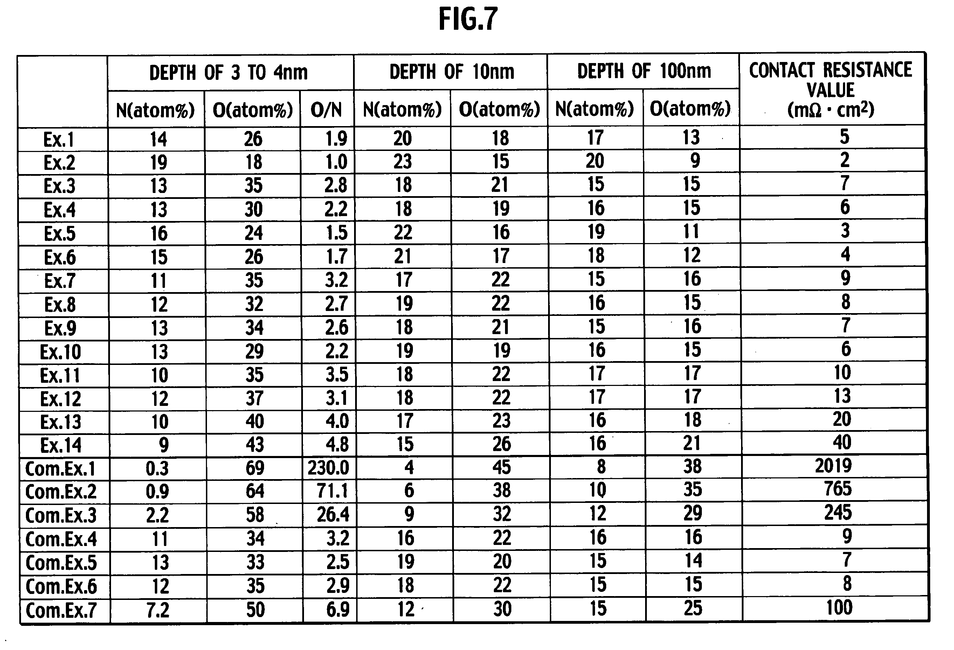

FIG. 7 shows nitrogen content and oxygen content at the depth of 3 to 4 nm from the outermost surface of the nitride compound layer in each of Examples 1 to 14 and Comparative Examples of 1 to 7, the ratios of the oxygen content to nitrogen content O/N, as well as nitrogen contents and oxygen contents at the depths of 10 nm and 100 nm from the outermost surface of each nitride compound layer.

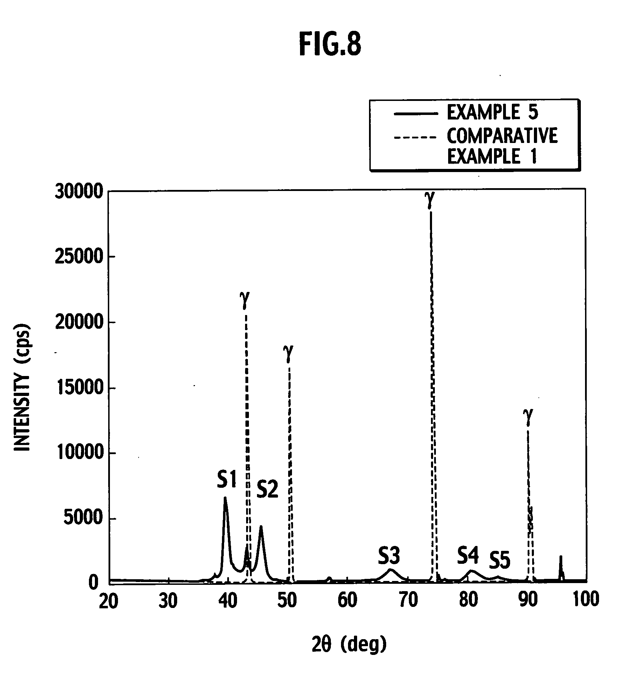

Further, FIG. 8 shows X-ray diffraction patterns of the samples obtained from the foregoing Example 5 and Comparative Example 1.

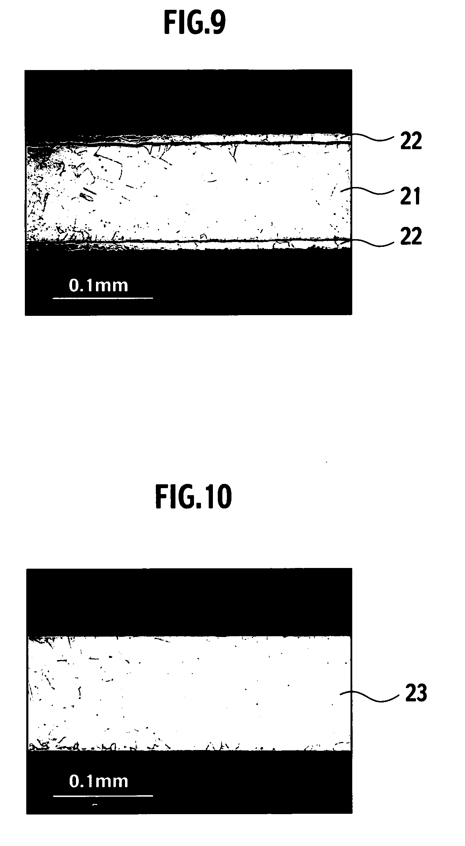

In Comparative Example 1, only peaks derived from austenite, the base material, were clearly observed. Meanwhile, in Example 5, not only peaks derived from austenite (γ in FIG. 8), the base material, but also peaks S1 to S5 indicating the foregoing M₄N-type crystal structure were observed. Here, M is mainly Fe and includes an alloy with Cr, Ni or Mo other than Fe. The thickness of each nitride compound layer was observed in the cross-sectional view shown in FIG. 9, and, in Example 5, about 5.5 µm-thick nitride compound layers were observed on the surfaces. As evident from above, despite the fact that the surface of the sample is covered with the nitride compound layer having the M₄N-type crystal structure, X-ray diffraction peaks derived from austenite, the base material, were also observed. The determined reason was that an incident depth of an X-ray into the base material was about 10 µm under the measurement conditions and therefore the base material was detected. In Examples 1 to 4 and 6 to 10, not only peaks derived from austenite, the base material, but also those of the aforementioned M₄N-type crystal structure were observed similarly to Example 5.

In Examples 11 to 14, peaks of Cr were observed in addition to the peaks indicating M₄N-type crystal structure. This proved that nitriding temperature exceeding 500 °C and nitriding time exceeding 10 minutes resulted in deposition of Cr-based nitride compound having the NaCl-type crystal structure such as CrN, other than the M₄N-type crystal structure.

Further, in the samples of Comparative Example 2 and 3, only the peaks derived from austenite, the base material, were observed since no nitride compound layers were formed similarly to Comparative Example 1. Furthermore, in Comparative Example 7, only the peaks derived from austenite, the base material, were observed. It can be considered that no nitride compound layer was formed in Comparative Example 7 because nitriding temperature was as low as 350 °C, and nitriding time was short.

In Comparative Examples 4 to 6, peaks indicating CrN and γ' phases were observed. The γ' phase had a crystal structure where an N atom is interstitially present in the octahedral hole at the center of the unit cell of a face-centered cubic lattice formed of Fe atoms, in other words, an Fe₄N-type crystal structure where an N atom is located in 1/4 of the octahedral hole. This Fe₄N-type crystal structure did not contain alloys of Cr and Ni other than Fe. Therefore, once the γ' phase was generated, Cr-based nitride compound having the NaCl-type crystal structure such as CrN was formed at the same time. It was thus considered that corrosion resistance of the base material was lowered, and an elution amount of Cr ion was increased as shown in FIG. 6.

In FIG. 9, the nitride compound layers 22 were formed on both surfaces of the base material 21. However, FIG. 10 shows that no modified layer such as a nitride compound layer was formed on the surface of the base material 23.

Further, as shown in FIG. 6, in Examples 1 to 14 where the nitride compound layers having the M₄N-type crystal structure were formed, contact resistance values were 40 mΩ·cm² or lower. On the contrary, in Comparative Examples 1 to 3 and 7 where no nitride compound layers were formed, contact resistance values were remarkably high. In a fuel cell, a theoretical voltage per single cell is 1.23 V, but a voltage which can be actually extracted is reduced due to reaction polarization, gas diffusion polarization and resistance polarization, and the larger a current to be extracted is, the lower the voltage becomes. Moreover, as higher power density per unit volume and weight is demanded, a fuel cell for a vehicle use is used at a high current density, for example, a current density of 1 A/cm², in comparison with a stationary type fuel cell. It is considered that, when the current density is 1 A/cm², an efficiency decrease due to contact resistance between a separator and a carbon paper can be suppressed if the contact resistance is 20 mΩ·cm², in other words, if a measurement value obtained from the device 10 is 40 mΩ·cm² or lower. In Examples 1 to 14, contact resistance values were 40 mΩ·cm² or lower, so an electromotive force per single cell is high, enabling a fuel cell stack with high electromotive force to be formed.

Next, according to the measurement results of ion elution amounts, it was found that Examples 1 to 8, where the thicknesses of the nitride compound layers were between 0.5 and 10 µm, had low ion elution amounts, so they had excellent corrosion resistance. In Example 9, since the thickness of the nitride compound layer was 0.03 µm, the contact resistance was low, but the ion elution amount was slightly more than those of Examples 1 to 8. This resulted in the corrosion resistance which was slightly inferior to that of Examples 1 to 8.

In Example 10, since the thickness of the nitride compound layer was over 10 µm, pitting corrosion easily occurred and the contact resistance value was thus low. The ion elution amount was also slightly more than those of Examples 1 to 8, and corrosion resistance was inferior to that of Examples 1 to 8. In Examples 11 to 14, Cr-based nitride compound having the NaCl-type crystal structure such as CrN was deposited in addition to compound having the M₄N-type crystal structure. Therefore, the contact resistance value and ion elution amount were higher than those of Examples 1 to 10.

Where a surface of austenitic stainless steel is not nitrated like Comparative Examples 1 to 3, contact resistance thereof becomes higher than that of Examples 1 to 10, because a passive state film is formed on the surface. Although austenitic stainless steel generally has excellent corrosion resistance because of the passive state film, corrosion resistance of Examples 1 to 3 was found to be inferior to that of Examples 1 to 8.

Like in Comparative Examples 4 to 6, where nitriding is performed but a nitride compound layer mainly contains CrN having the NaCl-type crystal construction, contact resistance becomes lower than that of Comparative Examples 1 to 3 where no nitriding was performed. However, corrosion resistance thereof becomes inferior to Comparative Examples 1 to 3.

Now we focus on nitrogen content and oxygen content measured by XPS at the depth of 3 to 4 nm from the outermost surface of the nitride compound layer, as well as the ratio of the oxygen content to the nitrogen content O/N shown in FIG. 7. In Examples 1 to 14, the nitrogen content and oxygen content were 10 atom% or higher and 35 atom% or lower, respectively, at the depth of 3 to 4 nm from the outermost surface of the nitride compound layer, and values of O/N were 4.8 or lower. In Examples 1 to 14, the contact resistance values were all 40 mΩ·cm² or lower. On the other hand, where the surface of austenitic stainless steel was not nitrided like in Comparative Examples 1 to 3, or where no nitride compound layer was formed like Comparative Example 7, passive state films were present on the surfaces of the base materials. Therefore, the oxygen contents at the depth of 3 to 4 nm from the outermost surface of these Comparative Examples were high, and the values of O/N were also very large. In Comparative Examples 4 to 6, since Cr-based nitride such as CrN was mainly deposited, the contact resistance was low and the values of O/N were small. However, the ion elution amounts were large and the corrosion resistance was thus deteriorated.

FIG. 11 shows an element profile in the depth direction obtained from the sample of Example 5 by scanning Auger electron spectrometry. As shown in FIG. 11, on the outermost surface of the nitride compound layer, there was an oxide film because of a small oxygen partial pressure present during nitriding, and electrons can freely move in the thickness direction of the oxide film. Thus, the highest oxide content can be seen on the outermost surface. However, since electrons can freely move only in the area between the outermost surface and the depth of 3 to 4 nm, the oxygen content was gradually reduced and the nitrogen content was increased. Further, at the depth of 10 nm from the outermost surface of the nitride compound layer, the nitrogen content was 33 atom% and the oxygen content was 16 atom%. At the depth of 100 nm, the nitrogen content was 19 atom% and the oxygen content was 5 atom%. The ratio of Fe, a component of the base material, started increasing from about the sputtering depth of 50 nm. The contact resistance value at this point was 30 mΩ·cm², and the ion elution amount was also low. This shows that Example 5, where the nitride compound layer having the M₄N-type crystal structure was formed, had satisfactory levels of contact resistance and corrosion resistance.

Similarly, in any of Examples 1 to 4 and 6 to 10 where contact resistance values were 40 mΩ·cm² or lower, the nitride content and the oxygen content at the depth of 10 nm from the outermost surface of the nitride compound layer were 16 atom% or higher and 22 atom% or lower, respectively, and the nitride content and the oxygen content at the depth of 100 nm from the outermost surface of the nitride compound layer were 15 atom% or higher and 17 atom% or lower, respectively. On the contrary, in Comparative Examples 1 to 3 where the contact resistance values exceed 10, the nitride content and the oxygen content at the depth of 10 nm from the outermost surface of the nitride compound layer deviated from the above-mentioned values, and the same at the depth of 100 nm from the outermost surface of the nitride compound layer also deviated from the above values. In Comparative Examples 4 to 6 where no passive state films were formed, the foregoing values were satisfied.

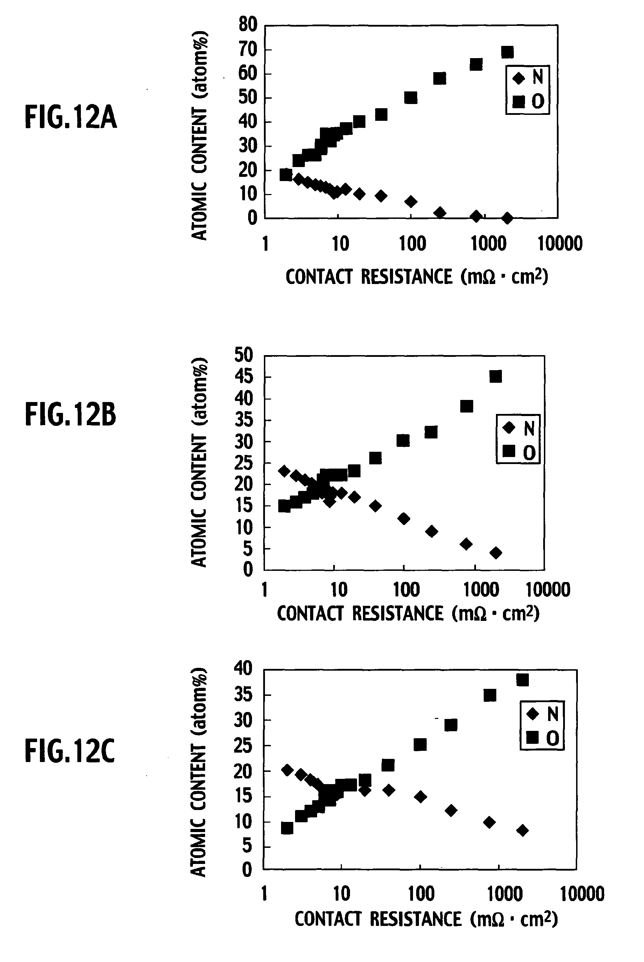

FIGS. 12A to 12C show relationships between nitrogen and oxygen contents and a contact resistance value. FIG. 12A shows a relationship between a contact resistance value and nitrogen and oxygen contents at the depth of 3 to 4 nm from the outermost surface of the nitride compound layer. FIG. 12B shows a relationship between a contact resistance value and nitrogen and oxygen contents at the depth of 10 nm from the outermost surface. FIG. 12C shows a relationship between a contact resistance value and nitrogen and oxygen contents at the depth of 100 nm from the outermost surface.

As shown in FIG. 12A, the nitrogen content and oxygen content at the depth of 3 to 4 nm from the outermost surface of the nitride compound layer have a good relative relationship with a contact resistance value. It was found that the more the nitrogen content, the smaller the contact resistance value becomes, and the less the oxygen content, the smaller the contact resistance value becomes. The reason of this is considered that, as stated earlier, where the oxygen content in a nitride compound layer is large, an insulating oxide film is formed on the surface of the base material and a contact resistance value becomes thus high, and, where a nitride compound layer is formed on the surface of the base material, the oxide film is prevented from glowing, and therefore contact resistance value becomes low.

Similarly, as shown in FIG. 12B, the nitrogen content and oxygen content at the depth of 10 nm from the outermost surface of the nitride compound layer have a good relative relationship with a contact resistance value. Further, as shown in FIG. 12C, the nitrogen content and oxygen content at the depth of 100 nm from the outermost surface of the nitride compound layer have a good relative relationship with a contact resistance value. It was thus found that the more the nitrogen content, the smaller the contact resistance value becomes, the lower the oxygen content, the smaller the contact resistance value becomes.

According to the measurement results above, any of the Examples 1 to 14 has a nitride compound layer having a crystal structure where an N atom is located in the octahedral hole at the center of the unit cell of a face-centered cubic lattice formed of at least one or more kinds of metal atoms selected from the group of Fe, Cr, Ni and Mo. Therefore, in comparison with Comparative Examples 1 to 7, any of Examples 1 to 14 shows a low contact resistance value of 40 mΩ·cm² or lower, and also has small ion elution amount and excellent corrosion resistance. This means that Examples 1 to 14 have both low contact resistance and high corrosion resistance.

Note that, in Examples, austenitic stainless steel was used as the base material. However, the base material is not limited to it. Similar effects can be achieved with ferritic or martensitic stainless steel. Ion nitriding was applied for the nitriding, but similar effects can be achieved by gas nitriding.

The entire contents of Japanese Patent Applications No. P2004-069488 with a filing date of March 11, 2004 and P2004-283573 with a filing date of September 29, 2004 are herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A fuel cell separator, comprising:
a base material (21) made of stainless steel; and
a nitride compound layer (22) provided on a surface of the base material (21).

2. A fuel cell separator according to claim 1,
wherein an atom ratio of chromium to iron contained in the nitride compound layer (22) is lower than that of chromium to iron contained in the base material (21).

3. A fuel cell separator according to claims 1 or 2,
wherein the nitride compound layer (22) has a crystal structure (6) where an nitrogen atom (8) is located in an octahedral hole at a center of a unit cell of a face-centered cubic lattice formed of at least one or more kinds of metal atoms (7) selected from iron, chromium, nickel and molybdenum.

4. A fuel cell separator according to any of claims 1 through 3,
wherein a thickness ratio of the nitride compound layer (22) to the base material (21) ranges from 1/200 to 1/10.

5. A fuel cell separator according to any of claims 1 through 4,
wherein a thickness of the nitride compound layer (22) ranges from 0.5 to 10 µm.

6. A fuel cell separator according to any of claims 1 through 5,
wherein an nitrogen content and an oxygen content at a depth of 3 to 4 nm from an outermost surface of the nitride compound layer (22) are 9 atom% or higher and 43 atom% or lower, respectively.

7. A fuel cell separator according to claim 6,
wherein the nitrogen content and the oxygen content at the depth of 3 to 4 nm from the outermost surface of the nitride compound layer (22) are 10 atom% or higher and 35 atom% or lower, respectively.

8. A fuel cell separator according to any of claims 1 through 7,
wherein a ratio of an oxygen content to a nitrogen content at a depth of 3 to 4 nm from an outermost surface of the nitride compound layer (22) is 4.8 or smaller.

9. A fuel cell separator according to claim 8,
wherein the ratio of the oxygen content to the nitrogen content at the depth of 3 to 4 nm from the outermost surface of the nitride compound layer (22) is 3.5 or smaller.

10. A fuel cell separator according to any of claims 1 through 9,
wherein, at a depth of 10 nm from an outermost layer of the nitride compound layer (22), a nitrogen content is 15 atom% or higher and an oxygen content is 26 atom% or lower.

11. A fuel cell separator according to any of claims 1 through 10,
wherein, at a depth of 100 nm from an outermost layer of the nitride compound layer (22), a nitrogen content is 16 atom% or higher and an oxygen content is 21 atom% or lower.

12. A fuel cell stack, comprising:
a fuel cell separator (1) including: a base material (21) made of stainless steel; and a nitride compound layer (22) provided on a surface of the base material (21).

13. A fuel cell vehicle, comprising:
a fuel cell stack (5) including a fuel cell separator (1) having: a base material (21) made of stainless steel; and a nitride compound layer (22) provided on a surface of the base material (21).

14. A method of manufacturing a fuel cell separator, comprising:
preparing a base material (21) made of stainless steel; and
nitriding a surface of the base material (21) at 590 °C or lower to form on the surface of the base material (21) a nitride compound layer (22) having a crystal structure (6) where a nitrogen atom (8) is located in an octahedral hole at a center of a unit cell of a face-centered cubic lattice formed of at least one or more kinds of metal atoms (7) selected from iron, chromium, nickel and molybdenum.

15. A method of manufacturing a fuel cell separator according to claim 14,
wherein the nitriding is performed at temperature of 500 °C or lower.

16. A method of manufacturing a fuel cell separator according to claims 14 or 15,
wherein the nitriding is ion nitriding.
